# FASCICULE DE BREVET EUROPEEN

(11) **EP 1 910 805 B1**
(45) Date de publication et mention de la délivrance du brevet: **22.12.2010**
(21) Numéro de dépôt: 06777881.1
(22) Date de dépôt: 21.07.2006
(51) Int. Cl.: G01N 21/41

(54) **REFRACTOMETRE OPTIQUE POUR LA MESURE DE LA SALINITE DE L'EAU DE MER ET CAPTEUR DE SALINITE CORRESPONDANT**
OPTISCHES REFRAKTOMETER ZUR MESSUNG DES SALZGEHALTS VON MEERWASSER UND ENTSPRECHENDER SALZGEHALTSENSOR
OPTICAL REFRACTOMETER FOR MEASURING SEAWATER SALINITY AND CORRESPONDING SALINITY SENSOR

(30) Priorité: 26.07.2005 FR 0507996
(43) Date de publication de la demande: 16.04.2008
(73) Titulaire: Groupe des Ecoles des Telecommunications/ Ecole Nationale Superieure de Telecommunications De Bretagne, 29238 Brest Cedex (FR)
(72) Inventeur: WU, Zong, Yan, F-29200 Brest (FR); DE BOUGRENET DE LA TOCNAYE, Jean-Louis, F-29820 Guilers (FR); LE MENN, Marc, F-29860 Plouvien (FR); GROSSO, Philippe, F-22300 Lannion (FR)
(74) Mandataire: Guéné, Patrick
(86) Numéro de dépôt international: PCT/EP2006/064492
(87) Numéro de publication internationale: WO 2007/012607

(56) Documents cités:
- EP-A- 0 289 833
- EP-A- 0 598 968
- GB-A- 2 074 316
- US-A- 4 320 291
- US-A- 6 130 439

## Description

### 1. Domaine de l'invention

Le domaine de l'invention est celui de la mesure de caractéristiques physiques de liquides.

Plus précisément, l'invention concerne la mesure de l'indice de réfraction de liquides notamment de l'eau de mer afin, par exemple de réaliser un capteur de salinité répondant aux besoins océanographiques par exemple pour l'équipement de sondes de mesure immergées.

### 2. Solutions de l'art antérieur

La détermination de la salinité de l'eau s'effectue aujourd'hui essentiellement via une mesure de sa conductivité électrique, connaissant sa température et la pression. Les capteurs de conductivité sont cependant peu fiables car très sensibles aux dégradations liées à l'environnement marin (tel qu'expliqué par le document «Capteurs de conductivité en océanographie : état de l'art et perspectives.» de M. Le Menn, publié dans RSTD Vol. 64, pp. 107-111, Juin 2004).

L'emploi d'autres méthodes basées sur la mesure de l'indice de réfraction de l'eau de mer (tel qu'illustré par le document «Remote refractive index difference meter for salinity sensor », de H. Minato, et al. Publié dans IEEE Trans on Instrumentation and Measurements, Vol. 38, N°2, pp. 608-612, 1989 ou par le document de brevet US 6 130 439) ou l'emploi de capteurs à fibre est envisageable.

La mesure de l'indice permet, connaissant la température et la pression, de remonter à la valeur de la salinité soit par l'utilisation des relations de R.C. Millard et G. Seaver (R.C. Millard et G. Seaver, "An index of refraction algorithm for seawater over temperature, pressure, salinity, density and wavelength", Deep-Sea Research, vol. 37, n° 12, pp 1909-1926, 1990) dont l'exactitude est de 0,024 ppt en salinité, soit par étalonnage direct en température, pression et salinité. Ce qui suppose que l'on puisse mesurer l'indice de réfraction de l'eau de mer avec une résolution d'au moins 10⁻⁶ dans les gammes océanographiques.

Une autre méthode connue de mesure d'indice de réfraction d'un liquide est présentée dans le document de brevet GB 2 074 316, cette méthode reposant sur la mesure de variations de l'intensité lumineuse d'un faisceau lumineux traversant le liquide concerné. Encore une autre méthode connue consistant à détecter la présence de bulle d'air dans un liquide par déviation du faisceau lumineux (et donc un changement d'indice de réfraction) traversant ce liquide, est présentée dans la demande de brevet EP 0 289 833.

Compte tenu de l'application visée, le capteur de salinité doit être compact et bas coût. Le problème majeur est le contrôle de la dérive de la mesure par rapport aux variations de température et de pression que doit subir le dispositif lors de son utilisation in situ. Ce point est d'autant plus critique que le dispositif est perdu ce qui justifie une relative autonomie du capteur et un coût peu élevé. Lors d'utilisations durant de longues périodes en milieu marin, un autre problème est à résoudre : celui de la résistance aux salissures ou dépôt organique de toutes sortes (« fouling » en anglais) qui provoquent, d'une façon générale, des dégradations des dispositifs de mesure.

### 3. Objectifs de l'invention

L'invention a notamment pour objectif de pallier ces inconvénients de l'art antérieur.

Plus précisément, un objectif de l'invention, dans au moins un de ses modes de réalisation, est de fournir un réfractomètre afin de réaliser un capteur de salinité qui soit insensible aux variations de température et de pression qu'il subit.

Un autre objectif de l'invention, dans au moins un de ses modes de réalisation, est de mettre en oeuvre un tel réfractomètre qui présente une résolution d'au moins 10⁻⁶.

L'invention, dans au moins un de ses modes de réalisation, a également pour objectif de réaliser un tel capteur de salinité qui soit particulièrement adapté aux mesures lorsqu'il est immergé et qui présente une grande résistance aux salissures ou dépôt organique de toutes sortes.

L'invention, dans au moins un de ses modes de réalisation, a encore pour objectif de réaliser un tel capteur de salinité qui soit compact et bas coût.

### 4. Exposé de l'invention

Ces objectifs, ainsi que d'autres qui apparaîtront par la suite, sont atteints à l'aide d'un réfractomètre optique pour la mesure de l'indice de réfraction d'un liquide.

Selon l'invention, un tel réfractomètre comprend un premier bloc optique constitué d'un matériau transparent auquel est solidarisé une source lumineuse, un

second bloc optique constitué d'un matériau transparent auquel est solidarisé un capteur de position (notamment un capteur de position à haute résolution), lesdits blocs optiques étant disposés de part et d'autre d'un conduit dans lequel circule le liquide, les premier et second blocs étant réalisés respectivement dans des premier et second matériaux transparents, les premier et second matériaux présentant des coefficients thermo-optiques opposés et sensiblement égaux en valeur absolue.

Ce réfractomètre est préférentiellement utilisé comme capteur de salinité à haute résolution (la salinité d'un liquide pouvant être déterminée à partir de l'indice de réfraction du liquide).

On entend par bloc optique un module massif qui est réalisé dans un matériau transparent pour les longueurs d'onde considérées (dans le contexte de la présente invention essentiellement dans le proche infra-rouge, le visible ou le proche ultra-violet).

Ainsi, une quantité de liquide (par exemple de l'eau de mer) pénètre et circule dans le conduit ce qui permet au réfractomètre de déterminer l'indice de réfraction de ce liquide et donc d'en déduire la salinité de ce liquide.

Ce réfractomètre se distingue du réfractomètre du document précité de H. Minato notamment de part le fait qu'il permet de mesurer l'indice de réfraction et notamment la salinité d'un liquide en circulation grâce à la mise en oeuvre d'un conduit.

Ainsi, il est donc non seulement adapté à faire des mesures in situ, et des mesures à différentes profondeurs ou situations géographiques (notamment dans un océan, une mer, un lac,...), mais il permet de plus de limiter les effet du fouling grâce à sa géométrie particulière. En effet, on choisit par exemple un conduit de section d'environ 1cm, ce qui permet d'éviter les effets de turbulence et ce qui permet par exemple de fixer des pastilles de TBT (Tri-Buthylétain) dans le conduit qui ont pour effet de limiter les effets du fouling.

Il offre également la possibilité de maîtriser le temps de réponse thermique du réfractomètre.

En effet, le temps de réponse dépend du rapport longueur / diamètre de la surface d'échange thermique entre le liquide et le conduit ainsi que de la vitesse de circulation du liquide. L'utilisation d'un conduit permet de fixer à volonté la

valeur de ces deux variables, la valeur de la vitesse de circulation du liquide pouvant en outre être rendue constante par l'utilisation d'une pompe.

Le choix d'une section du conduit de 1 cm correspond à un compromis entre une section suffisante pour permettre une bonne conduction thermique (entre le liquide et le capteur de salinité) mais pas trop importante pour éviter les régimes de turbulence.

Par ailleurs, sa géométrie nouvelle et inventive à base de deux blocs optiques distincts permet avantageusement de mettre en oeuvre simplement, efficacement et pour un faible coût, différentes caractéristiques ingénieuses (décrites ci-après) afin de le rendre insensible aux variations de température et de pression du milieu dans lequel il est placé.

Cette première solution permet de rendre le chemin optique parcouru par le faisceau laser insensible aux variations de température. En effet, les variations en fonction de la température du chemin optique traversé par le faisceau laser dans le premier bloc sont compensées par les variations en fonction de la température du chemin optique traversé par le faisceau laser dans le second bloc. On réalise ainsi une compensation des décalages du spot du faisceau laser par rapport au capteur de position dus aux variations du chemin optique parcouru dans les blocs optiques en fonction de la température.

Cette première technique de compensation des effets des variations de température permet de réaliser des capteurs de salinité à faible coût.

Préférentiellement le liquide est de l'eau de mer et le réfractomètre est apte à fonctionner lorsqu'il est immergé.

Selon une caractéristique avantageuse de l'invention, la source lumineuse est une source laser coopérant avec des moyens de focalisation permettant de focaliser le faisceau laser sur le capteur de position.

Avantageusement, la taille du spot du faisceau laser focalisé sur le capteur de position est comprise entre 200 µm et 1 mm.

Ainsi, on peut obtenir, sur cette plage de taille de spot, une résolution du réfractomètre supérieure à 10⁻⁶.

Préférentiellement, les moyens de focalisation sont disposés à proximité de la source laser.

Selon une caractéristique avantageuse de l'invention, la source laser émet dans le visible.

Selon un premier mode de mise en oeuvre avantageux de l'invention, les premier et second blocs sont disposés à proximité l'un de l'autre et forment un Vé permettant d'accueillir le conduit, le premier bloc comprend un premier côté comprenant un premier miroir, le second bloc comprend un second côté comprenant un second miroir, afin que le faisceau laser se réfléchisse sur le premier miroir, traverse le conduit et se réfléchisse sur le second miroir.

Préférentiellement, l'angle de réfraction du faisceau laser dans le liquide du conduit est compris entre 29 et 31°.

Avantageusement, le réfractomètre selon l'invention comprend des moyens de rappel permettant de maintenir le conduit contre le Vé.

Selon un second mode de mise en oeuvre avantageux de l'invention, les premier et second blocs optiques sont sensiblement alignés de part et d'autre du conduit.

Selon un premier mode de réalisation de l'invention conforme au premier mode de mise en oeuvre précité, la section du conduit est sensiblement circulaire à l'endroit où le faisceau laser le traverse et des premier et second hublots sont prévus respectivement entre le premier bloc et le conduit et entre le conduit et le second bloc.

Ainsi, la mise en oeuvre des hublots transparents permet de rendre les interfaces premier bloc optique / liquide et liquide / second bloc optique planes ce qui permet d'éviter les effets d'élargissement du faisceau laser qui résultent d'interfaces (ou dioptres) courbes.

Préférentiellement, la section du conduit est sensiblement polygonale à l'endroit où le faisceau laser le traverse.

Selon un second mode de réalisation de l'invention conforme au premier mode de mise en oeuvre précité, la section du conduit est sensiblement héxagonale à l'endroit où le faisceau laser le traverse.

Selon un troisième mode de réalisation de l'invention conforme au premier mode de mise en oeuvre précité, la section du conduit est sensiblement prismatique à l'endroit où le faisceau laser le traverse.

Ainsi, selon ces trois mode de réalisation, la forme de la section du conduit et la géométrie des deux blocs optiques du réfractomètre permet de rendre négligeable les déplacements du spot du faisceau laser sur le capteur de position dus aux variations de pression dans le conduit.

Avantageusement, le ou les matériaux transparents présentent chacun un coefficient thermo-optique de l'ordre de 10⁻⁷ K⁻¹ en valeur absolue. Par exemple le ou les matériaux sont choisis parmi l'ensemble des matériaux optiques standards (Marques déposées par la société Schott Glass Techologies) comprenant :
- N-K5;
- N-F2 ;
- N-BAF51 ;
- N-LF5 ;
- N-SF5 ;
- N-SK10.

Ces matériaux possèdent un coefficient thermo-optique très faible, de l'ordre de 10-7 K-1. Ceci qui permet d'obtenir des résolutions de bonne qualité sans avoir à mettre en oeuvre de système de compensation des décalages du spot du faisceau laser par rapport au capteur de position dus aux variations en fonction de la température des indices des blocs optiques.

Avantageusement, les premier et second matériaux présentent chacun un coefficient thermo-optique sensiblement égal à 10⁻⁷ K⁻¹ en valeur absolue.

Par exemple les premier et second matériaux sont respectivement les matériaux optiques standards N-BK7 et N-LLF1 ou N-K5 et N-SK10 (Marques déposées par la société Schott Glass Technologies).

Préférentiellement, au moins un des premier et second blocs sont au moins partiellement évidés, le ou les évidements étant destinés à recevoir des matériaux conducteurs thermiques afin de réduire l'inertie thermique du ou desdits blocs.

Selon une seconde solution avantageuse de l'invention, le réfractomètre selon l'invention comprend un capteur de température et des moyens de traitement électronique afin de mesurer la variation de température d'au moins un des blocs optiques et d'en déduire la salinité ou l'indice de réfraction du liquide.

Ainsi, grâce à la connaissance de la température du bloc optique, on peut réaliser une compensation de nature logicielle (après obtention des mesures) des décalages du spot laser par rapport au capteur de position dus aux variations de l'indice des blocs optiques en fonction de la température.

Selon une troisième solution avantageuse de l'invention, le capteur de position est solidarisé à un support dont les dimensions varient en fonction de la température de manière à compenser au moins un décalage du faisceau optique par rapport au capteur de position en fonction de la température.

Ainsi, on obtient une alternative à la compensation à base de matériaux présentant des coefficients thermo-optiques opposés et à la compensation logicielle précitées des décalages du spot laser par rapport au capteur de position provenant de la variation de l'indice des blocs optiques en fonction de la température. Cette alternative présente l'avantage de ne pas avoir à réaliser de traitement des données mesurées.

Selon une première caractéristique avantageuse, le support est réalisé dans un matériau conducteur thermique et au moins une partie du support est en contact thermique avec le liquide à mesurer.

Selon une seconde caractéristique avantageuse, le support est réalisé dans un matériau conducteur thermique et la variation de ses dimensions est asservie, grâce à des moyens de traitement, à au moins un capteur de température monté à proximité d'au moins un desdits blocs optiques.

L'invention concerne également un capteur de salinité comprenant un réfractomètre tel que précédemment décrit.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- les figures 1A à 1C, illustrent le principe de fonctionnement de trois types de réfractomètres conformes à un premier mode de mise en oeuvre de l'invention correspondants respectivement à un premier mode de réalisation dans lequel la section du conduit est cylindrique (figure 1A), un second mode de réalisation selon lequel la section du conduit est hexagonale (figure 1B) et un troisième mode de réalisation selon lequel la section du conduit est prismatique (figure 1C) ;
- la figure 2 illustre l'élargissement du faisceau laser dû aux deux dioptres courbes aux interfaces bloc optique global / conduit et conduit / bloc optique global dans le réfractomètre selon le premier mode de réalisation de l'invention décrit en relation avec la figure 1 ;
- la figure 3 illustre l'encastrement de la diode laser dans le verre du bloc optique global du réfractomètre afin de réduire le chemin optique parcouru par le faisceau laser ;
- La figure 4 présente un schéma du réfractomètre selon le premier mode de réalisation de l'invention dans sa coupe longitudinale ;
- la figure 5, présente un schéma détaillé des blocs optiques du réfractomètre selon le premier mode de réalisation de l'invention ;
- la figure 6 illustre la mise en oeuvre d'un support dans le réfractomètre selon le premier mode de réalisation de l'invention dont la dilatation thermique permet de réaliser une compensation automatique de la dépendance thermique de l'indice des blocs optiques ;
- les figures 7A à 7C sont des vues de face (figure 8A), de côté (figure 8B) et de section selon un axe XX' (figure 8C) d'un réfractomètre selon un second mode de mise en oeuvre de l'invention ;
- la figure 8 illustre la focalisation du faisceau laser elliptique sur le capteur de position dans le cadre du réfractomètre selon le second mode de mise en oeuvre de l'invention.

### 6. Description d'un mode de réalisation de l'invention

Le principe général de l'invention repose sur une géométrie particulière d'un réfractomètre utilisé comme capteur de salinité, mettant en oeuvre deux blocs optiques sensiblement symétriques autour d'un conduit et un capteur de position de haute résolution (par exemple un capteur de type PSD pour « Position Sensing Detector »), afin d'obtenir une mesure de salinité précise et qui peut aisément être rendue insensible aux pression et température du milieu dans lequel le réfractomètre est placé.

Ainsi, l'invention repose sur deux caractéristiques principales :
- le montage du réfractomètre, en lui-même, permet d'obtenir une déviation maximum du faisceau réfracté (donc une bonne résolution), une insensibilité de la mesure aux variations de pression du liquide à mesurer et
- la mise en oeuvre d'un dispositif de compensation thermique qui rend le réfractomètre lui-même insensible aux effets de la température.

Ces deux caractéristiques sont mises en oeuvre de façon coopérative pour garantir une faible dépendance aux variations environnementales à faible coût et de manière très compacte. Le principe de mise en oeuvre adopté permet en plus d'adapter des moyens efficaces pour limiter les effets du « fouling » d'origine marine et il offre la possibilité de maîtriser le temps de réponse thermique du dispositif.

On va se placer dans la suite dans le cadre préférentiel d'une utilisation du réfractomètre selon l'invention pour réaliser un capteur de salinité de l'eau de mer.

La géométrie et les dimensions des différents éléments du réfractomètre, et notamment du conduit dans lequel l'eau de mer circule, obéissent aux trois impératifs ci-après mentionnés.

Tout d'abord, le réfractomètre doit pouvoir mesurer tout changement d'indice de réfraction de l'eau, qu'il soit dû à un changement de pression, de température ou de salinité. L'insensibilité en pression et en température signifie que, quelque soient les pressions et températures appliquées au dispositif, ce dernier doit donner la valeur «vraie» de l'indice du liquide qu'il mesure, le problème vient donc de la dépendance à la pression et à la température des indices matériaux utilisés pour réaliser le réfractomètre et non de la dépendance de l'indice du liquide à mesurer aux pression et température.

Ensuite, dans le cas d'une mesure d'indice de réfraction, la configuration d'écoulement doit être de préférence laminaire plutôt que turbulente (ce qui est préféré dans le cadre d'un capteur de conductivité, en effet, les turbulences permettant un meilleur échange thermique). On considère, compte tenu des vitesses de circulation de l'eau dans le conduit dans le contexte applicatif, qu'une section efficace de cylindre ou de prisme d'environ 1 cm présente un bon compromis entre limitation des turbulences, effets d'écoulement et réponse thermique satisfaisante.

Enfin, le choix des matériaux transparents des blocs optiques est également déterminé par le bilan thermique du réfractomètre (ou capteur de salinité).

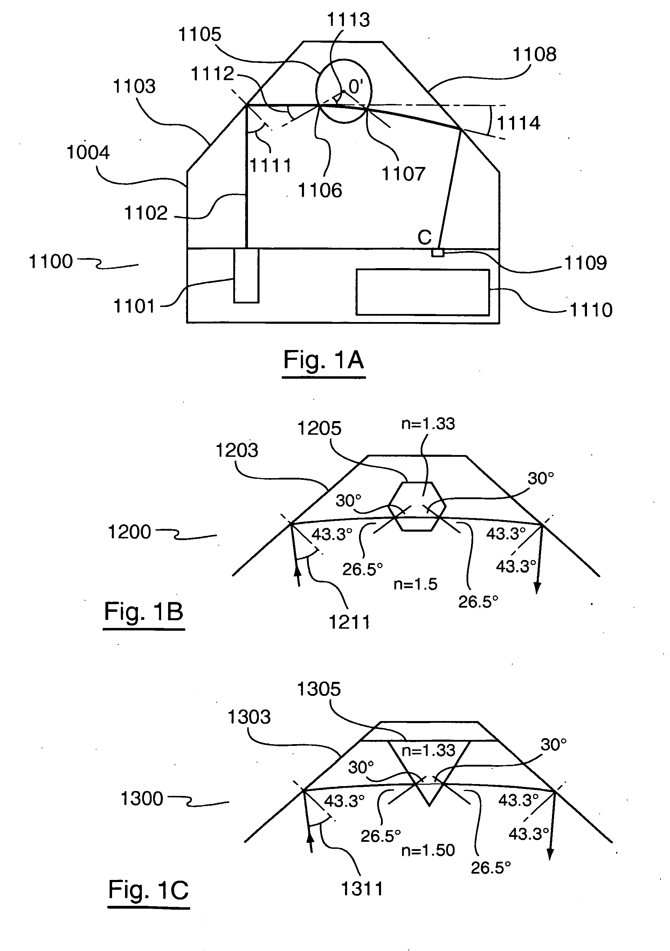

On illustre, en relation avec les ***figures 1A à 1C***, le principe de fonctionnement de trois types de réfractomètres conformes à un premier mode de mise en oeuvre de l'invention correspondants respectivement à un premier mode de réalisation dans lequel la section du conduit est cylindrique (figure 1A), un second mode de réalisation selon lequel la section du conduit est polygonale, par exemple, hexagonale (figure 1B) et un troisième mode de réalisation selon lequel la section du conduit est prismatique (figure 1C).

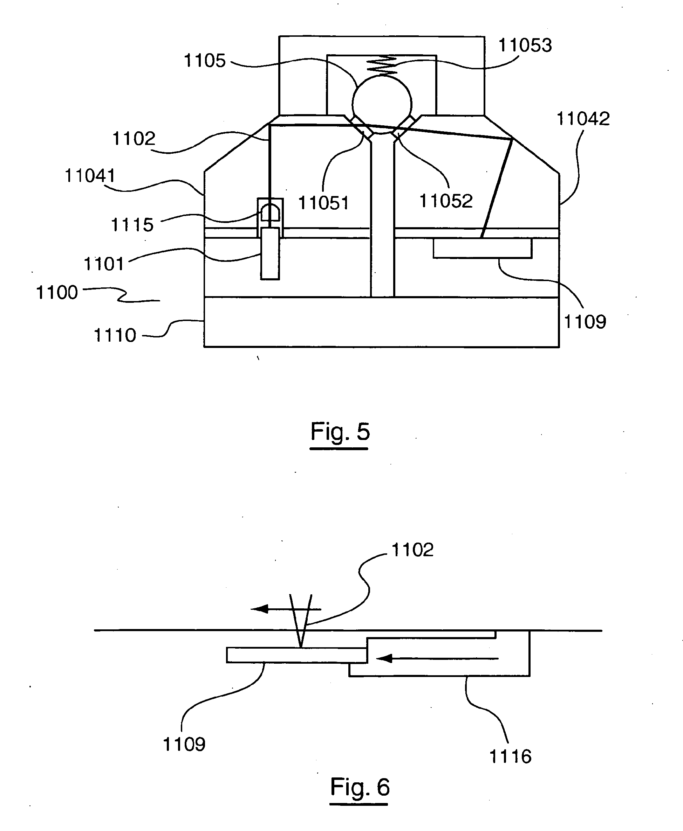

Ces schémas des figures 1A à 1C ne sont présentés que pour illustrer le principe de fonctionnement des réfractomètres selon un premier mode de mise en oeuvre de l'invention. Ainsi, par soucis de simplicité, on a représenté les premier et second blocs optiques sous la forme d'un seul bloc optique global 1104 qu'il faut considérer comme étant constitué par les premier et second blocs optiques (tel qu'illustré par la figure 5 décrite ci-après).

Le premier réfractomètre 1100 selon le premier mode de réalisation de l'invention comprend une source lumineuse qui est par exemple une diode laser 1101 émettant dans le visible.

La diode laser 1101 émet un faisceau laser 1102 qui est réfléchi sur un premier côté 1103 (formant miroir) du bloc optique global 1104, qui traverse ensuite le conduit 1105. Après avoir traversé le conduit 1105, le faisceau 1102 est donc dévié par réfraction au niveau de l'interface 1106 bloc optique global / eau de mer du conduit 1105 et au niveau de l'interface 1107 eau de mer / bloc optique global. Le faisceau 1102 est ensuite réfléchi sur un second côté 1108 (formant miroir) du bloc optique global 1104 puis est détecté par le capteur de position 1109. Un bloc électronique 1110 permet de traiter les signaux du capteur de position 1109 et de déduire l'indice de réfraction de l'eau de mer ainsi que la salinité de l'eau de mer.

Le capteur de position 1109 présente une longueur utile d'environ 2 mm.

Une optique de focalisation (non représentée sur cette figure 1A), par exemple une lentille, permet de focaliser le faisceau 1102 de la diode laser 1101 sur le capteur de position 1109 de manière à obtenir un faisceau focalisé d'environ 200µm de diamètre de spot au niveau du capteur de position 1109.

Bien entendu, on peut choisir d'autres diamètres de spot (préférentiellement un diamètre compris entre 200 µm et 1 mm) pour le faisceau laser focalisé au niveau du capteur de position 1109 sans sortir du cadre de la présente invention.

En effet, on obtient, sur cette plage de diamètres de spot, une résolution du réfractomètre supérieure à 10⁻⁶.

L'optique de focalisation peut être disposée à la sortie de la diode laser, ou à tout point du chemin optique du faisceau laser 1102.

Le faisceau laser 1102 forme un angle d'incidence 1111 de sensiblement 45° sur le premier côté 1103 et un angle d'incidence 1112 de sensiblement 26,5° sur l'interface 1106 bloc optique global / conduit du côté du bloc optique global. Ainsi l'angle de réfraction 1113 du côté du conduit est sensiblement égal à 30°.

Si l'on se place dans le cas d'un bloc optique global constitué de verre d'indice de réfraction 1,5, la déviation 1114 du faisceau engendrée par la réfraction au niveau du conduit 1105 vaut sensiblement 8,394 ± 1,45° lorsque l'indice de réfraction de l'eau de mer est comprise entre 1,31 et 1,36.

Selon des variantes des premier, second et troisième modes de réalisation précités, les premier 1103 et second 1108 côtés peuvent être recouvert d'un miroir ou de toute couche de matériau venant renforcer la réflectivité, par exemple une couche d'or.

Dans le cas des réfractomètres 1200, 1300 des second (conduit 1205 de section hexagonale) et troisième (conduit 1305 de section prismatique) mode de réalisation de l'invention, l'angle d'incidence 1211, 1311 formé par le faisceau laser au niveau du premier côté 1203, 1303 est sensiblement égal à 43,3°.

Par souci de simplicité, on n'a pas représenté sur les figures 1B et 1C le laser, l'optique de focalisation ou le capteur de position.

Les réfractomètres 1100, 1200, 1300 précités sont équivalents d'un point de vue de l'optique géométrique et permettent une déviation maximum du faisceau réfracté. L'angle d'incidence sur le premier côté (45° ou 43,3° suivant le cas) préserve un angle d'incidence constant dans les deux cas par rapport à la normale au dioptre bloc optique global / eau de mer du conduit.

Il convient néanmoins de considérer les effets secondaires de courbure de champ occasionnés par le montage.

Dans le cadre des réfractomètres 1200, 1300 (conduits de section héxagonale ou prismatique) selon les second et troisième mode de réalisation précités, si l'on prend en compte un indice moyen pour l'eau de mer de 1,33, il n'y a pas d'effet d'élargissement du faisceau.

Pour un indice de réfraction de l'eau de mer variant entre 1,31 et 1,35, l'angle de réfraction varie de ± 0,89° donc le diamètre du faisceau laser (pour un angle de réfraction moyen du côté du conduit de 30°) varie dans le rapport des cosinus (cos(30-0,89)/cos(30+0,89) = 1,02) c'est-à-dire de ± 1 % sans changer les angles de déviation. Or, le capteur de position effectue une mesure correcte de la déviation avec un faisceau dont le diamètre varie de 198 à 202 µm, ainsi, l'effet d'élargissement du faisceau n'a pas d'impact sur le fonctionnement du réfractomètre.

Dans le cadre du réfractomètre 1100 (conduit de section circulaire) selon le premier mode de réalisation précité, l'élargissement du faisceau par effet de prisme du faisceau est du même ordre que dans le cas des réfractomètres 1200 et 1300 donc négligeable.

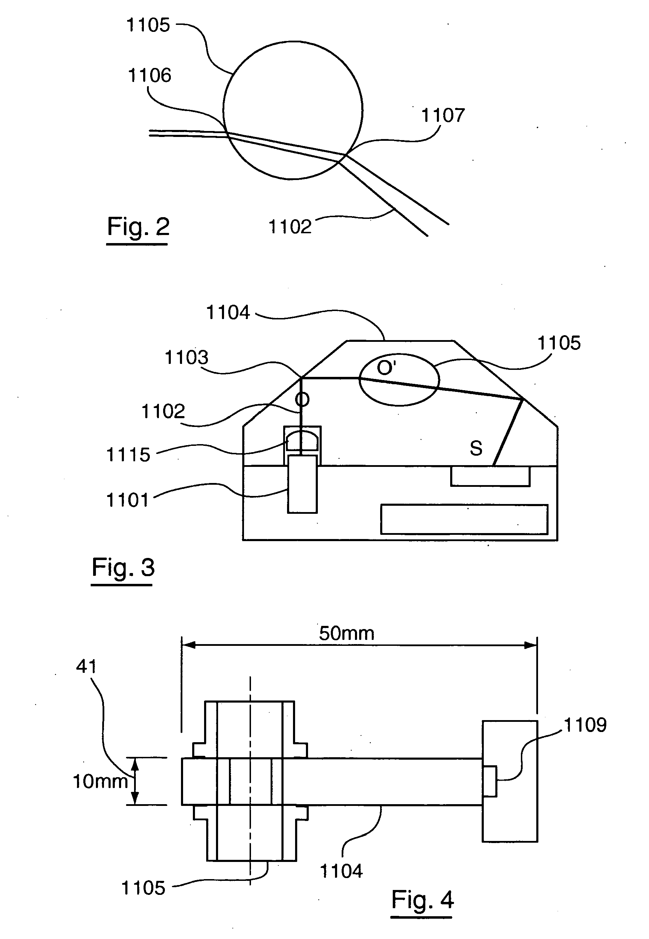

Cependant, s'ajoute à cela la puissance de l'optique cylindrique créée par les deux dioptres courbes (correspondants aux interfaces bloc optique global / conduit 1106 et conduit / bloc optique global 1107). Tel qu'illustré par ***la*** ***figure 2*****,** ceci conduit à un élargissement du faisceau laser 1102.

L'élargissement angulaire est de l'ordre de 2,5°, ainsi, sans compensation de cet effet cylindrique, le spot du faisceau laser 1102 prévu pour présenter un diamètre de 200 µm au niveau du capteur de position 1109 s'élargit de 1,4 mm. Cet élargissement du spot laser fait chuter la résolution du réfractomètre. En conséquence, le réfractomètre ne peut pas fonctionner sans compensation.

La compensation de l'effet cylindrique consiste, soit à tenir compte dans le trajet optique de la distance focale de l'optique cylindrique divergente (qui est sensiblement égale 25 mm), soit à supprimer l'effet cylindrique en collant à chacune des interfaces bloc optique global / conduit 1106 et conduit / bloc optique global 1107 un hublot à faces parallèles. Cette solution permet de retrouver sensiblement la configuration des second ou troisième modes de réalisation de l'invention (invariance de l'angle d'incidence) tout en conservant la géométrie cylindrique du conduit.

On s'impose une taille de spot laser sur le capteur de position dont le diamètre du col φ est compris entre 200 µm et 1 mm et on choisi par exemple φ = 200 µm.

La longueur de chemin optique parcouru par le faisceau laser 1102 est égale à quelques dizaines de mm du fait des dimensions du bloc optique global, cependant, elle peut être réduite en intégrant la diode laser et son optique de focalisation 1115 dans le bloc optique global lui-même (tel qu'illustré par la ***figure 3***). La divergence du faisceau laser 1102 dans le bloc optique global en verre (d'indice sensiblement égal à 1,5) est de 4λ/πφn = 4 mrad où λ est la longueur d'onde du laser.

La ***figure 4*** présente un schéma du réfractomètre 1100 dans sa coupe longitudinale selon le premier mode de réalisation de l'invention. L'épaisseur 41 du réfractomètre 1100 au niveau du bloc optique global 1104 est comprise entre 10 et 20 mm. Ceci constitue un optimum entre rigidité et réponse thermique suffisante.

Le conduit est réalisé de préférence dans un métal inoxydable (par exemple dans un alliage Fe-Ni-Cr ou dans un aluminium anodisé) qui permet d'une part, d'optimiser le temps de réponse thermique du réfractomètre et d'autre part, d'adapter des moyens permettant de limiter les effets du « fouling » d'origine marine, par exemple grâce à des pastilles de TBT (Tri-Buthylétain). On peut également noter que le choix d'une section efficace du conduit sensiblement égale à 1 cm est compatible avec la fixation de pastilles de TBT.

Nous allons présenter plus en détail ci-après les éléments principaux constituant le réfractomètre 1100 selon le premier mode de réalisation de l'invention.

Le capteur de position 1109 est par exemple un PSD commercialisé par la société HAMAMATSU sous la référence S4584-06. Il est sensible dans le rouge pour des longueurs d'onde autour de 635 nm, il est également sensible pour des longueurs d'onde supérieures à 800nm. Il présente une résolution maximale de 0,1 µm (ce qui est négligeable lorsque comparé au diamètre du spot laser), une longueur utile de 2,5 mm et coopère avec un circuit électronique référencé C3683-01.

Ce capteur de position 1109 présente une bonne résolution, de l'ordre de 0,3 µm, avec une tolérance de positionnement très grande. Ces caractéristiques du capteur de position permettent d'envisager l'utilisation d'une taille de spot effective comprise entre 200 µm et 1 mm. On montre que la qualité du faisceau joue peu sur le résultat de la mesure. En outre, seule la direction longitudinale importe ce qui autorise l'utilisation d'un faisceau laser de forme elliptique avec les avantages qui en résultent pour le montage optique (notamment la simplification de l'optique de focalisation, le fait que l'on n'a plus besoin d'optique de focalisation que dans une seule direction, le fait qu'une faible puissance optique est suffisante).

La diode laser 1101 est par exemple une diode laser collimatée commercialisé par la société PHOTONIC sous la référence 301-P. Elle émet un faisceau laser de longueur d'onde de 635 nm, de puissance sensiblement égale à 0,9 mW, de taille de faisceau d'environ 1,8 mm x 1,8 mm, de divergence maximum dans l'air de 6 mrd et de diamètre de faisceau collimaté de 8 mm.

On présente, en relation avec la ***figure 5*****,** un schéma détaillé du bloc optique global 1104 du réfractomètre 1100 selon le premier mode de réalisation de l'invention.

Le bloc optique global est constitué d'un premier 11041 et d'un second 11042 blocs optiques indépendants constitués de matériaux transparents. Le premier bloc optique 11041 est un bloc optique émission auquel est solidarisé (par exemple par collage) la diode laser 1101 et l'optique de focalisation 1115. Au second bloc optique 11042, sensiblement symétrique au premier bloc optique 11041, est solidarisé le capteur de position PSD 1109 (par exemple par collage).

Les premier 11041 et second 11042 blocs optiques forment un Vé entre eux afin d'accueillir le conduit 1105 de forme cylindrique ainsi que des premier 11051 et second 11052 hublots prismatiques situés respectivement entre le premier bloc optique 11041 et le conduit 1105 et entre le conduit 1105 et le second bloc optique 11042. Ces hublots permettent de s'affranchir de l'élargissement du faisceau laser dû à l'effet cylindrique (généré par les dioptres courbes des interfaces 1106, 1107) tel qu'expliqué précédemment et de maintenir un angle d'incidence constant.

On peut remarquer que dans les cas des second et troisième modes de réalisation de l'invention, les premier 11041 et second 11042 blocs optiques accueillent respectivement le conduit 1205 de section hexagonale (ou plus généralement polygonale) et le conduit 1305 de section prismatique mais sans que soit mis en oeuvre de hublots.

L'ensemble «conduit 1105 - hublots 11051, 11052» est maintenu en appui permanent sur le Vé des premier 11041 et second 11042 blocs optiques par un ressort de rappel 11053.

Préférentiellement (mais pas obligatoirement), on choisit pour les matériaux des premier 11041 et second 11042 blocs optiques des matériaux transparents présentant des coefficients thermo-optiques opposés et égaux en valeur absolue afin de rendre le chemin optique parcouru par le faisceau laser 1102 insensible aux variations de température (tel qu'expliqué ci-après). Ainsi, les variations en fonction de la température du chemin optique traversé par le faisceau laser dans le premier bloc sont compensées par les variations en fonction de la température du chemin optique traversé par le faisceau laser dans le second bloc.

On peut par exemple choisir de réaliser le premier bloc optique 11041 en verre, qui voit son indice augmenter avec la température, et le second bloc optique 11042 en un polymère adapté qui voit sont indice diminuer avec la température. Le choix du polymère doit être tel que les variations du chemin optique dans le premier bloc optique 11041 compensent les variations du chemin optique dans le second bloc optique 11042.

On peut par exemple réaliser les blocs optiques dans des matériaux tels que les :
- N-K5 ;
- N-F2 ;
- N-BAF51 ;
- N-LF5 ;
- N-SF5 ;
- N-SK10 ;
- N-BK7 ;
- N-LLF1.

On présente en ***annexe 1*** un tableau présentant les caractéristiques (indice, variation de l'indice en fonction de la température, le coefficient d'absorption sur une plage de température de -30°C à 70°C et la densité) des six premiers matériaux précités. Ces matériaux sont susceptibles d'être utilisés sans compensation des variations de leur indices dus aux variation de température du fait de leur faibles coefficient thermo-optique.

On présente en ***annexe 2*** un tableau présentant les caractéristiques (indice, variation de l'indice en fonction de la température, le coefficient d'absorption sur une plage de température de -30°C à 70°C et la densité) des deux derniers matériaux précités. Ces matériaux constituent un exemple de couple de matériaux présentant des coefficients thermo-optiques très proches en valeur absolue et de signe contraire.

On explique ci-après en quoi les réfractomètres selon l'invention présentent une indépendance par rapport aux variations de température et de pression.

La variation de pression et de température en cours de descente d'une sonde comprenant un capteur de salinité à base d'un réfractomètre selon l'invention peut occasionner une modification des caractéristiques des chemins optiques (qui dépendent des pression et température) et des indices (qui dépendent essentiellement de la température).

Ces deux effets ont un impact sur la mesure de l'indice de réfraction de l'eau de mer du fait qu'ils conduisent une translation et/ou un élargissement (sur un domaine d'élargissement acceptable) de la taille du spot sur le capteur de position PSD.

Ces deux effets n'agissent toutefois pas de la même manière et au même moment. En effet, on peut notamment supposer que la pression ne s'exerce que sur le conduit (les premier et second blocs optiques étant conditionnés de manière satisfaisante, il ne subissent pas l'impact de la pression).

Sur une plage de température s'étendant de 0°C à 35 °C, on peut observer une variation de l'indice des premier et second blocs optiques en fonction de la température du réfractomètre. Toutefois l'effet de la température n'est pas immédiat et dépend du gradient thermique du bloc optique. En outre il n'affecte pas la mesure au moment où la prise de celle-ci survient.

Sur une plage de pression s'étendant de 0 à 200 bar, on observe une dilatation des matériaux en fonction de la pression. L'effet de la pression est immédiat et doit être considéré.

On explique ci-après l'insensibilité des réfractomètres selon l'invention aux effets de la pression (notamment au niveau du conduit).

La pression ne s'exerce qu'à l'intérieur du conduit et elle a pour conséquence d'augmenter le diamètre du conduit.

Dans le cas du conduit à section hexagonale ou prismatique (réfractomètre selon les second et troisième mode de réalisation de l'invention), la dilatation du conduit ne modifie pas l'angle d'incidence du faisceau laser sur le conduit et ne perturbe donc pas le fonctionnement du réfractomètre.

Dans le cas du conduit à section circulaire (réfractomètre selon le premier mode de réalisation de l'invention), la dilatation du conduit ne modifie pas non plus l'angle d'incidence du faisceau laser sur le conduit du fait que celui-ci est pourvu des deux hublots en appui sur le Vé à 60° formé par les premier et second blocs optiques (tel qu'expliqué précédemment en relation avec la figure 5).

En effet, au cours de la dilatation (due à une augmentation de pression), les deux hublots vont se décaler sans changer ni l'angle d'incidence ni le trajet optique. Le maintien du conduit en appui sur le Vé est réalisé par exemple grâce au ressort 11053.

On explique ci-après l'insensibilité des réfractomètres selon l'invention aux effets de la température (notamment au niveau des blocs optiques).

On peut envisager principalement trois solutions selon l'invention (qui peuvent être combinées) pour rendre insensible les réfractomètres selon l'invention aux variations de températures.

La première solution consiste à mesurer la variation de température des blocs optiques au moyen d'un ou plusieurs capteurs de température et d'effectuer les corrections off-line sur la translation du spot.

Ce ou ces capteurs de température doivent être préférentiellement incorporés dans au moins un des blocs optiques de manière à mesurer précisément l'évolution du gradient de température. La correction est alors de nature logicielle.

Les variations de température conduisent à une variation du chemin optique parcouru dans les premier et second blocs optiques due à une variation des indices des premier et second blocs optiques. On décrit ci-après la seconde solution permettant une compensation automatique des effets de la température.

Tel qu'indiqué ci-dessus, en relation avec la figure 5, afin d'obtenir l'insensibilité aux variations de température, on peut utiliser un premier et un second blocs optiques constitués des deux matériaux transparents possédant des coefficients thermo-optiques égaux en valeur absolue et opposés. On peut par exemple utiliser un verre pour le premier bloc optique et un polymère pour le second.

En effet si les premier et second blocs sont réalisés en verre, la déviation d, donnée par la formule : d = 2.(r-i) où r est l'angle de réfraction et i l'angle d'incidence, augmente avec la température du fait que r augmente avec la température (du fait que l'indice du verre augmente avec la température). Ainsi, il est possible de retrouver la déviation initiale (avant la variation de température) en augmentant i, par exemple en remplaçant le second bloc en verre par un second bloc en polymère dont l'indice diminue en fonction de la température et dont l'amplitude de la variation est la plus proche possible de celle du verre.

On décrit ci-après la troisième solution permettant une compensation automatique des effets de la température.

Selon l'invention, afin de réaliser la compensation automatique précitée des variations d'indices des premier et second blocs optiques, on peut par exemple compenser le déplacement du spot sur le capteur de position PSD par un déplacement inverse du capteur lui-même.

Pour ce faire (tel qu'illustré par la ***figure 6*** dans le cas du réfractomètre selon le premier mode de réalisation de l'invention), on peut rendre solidaire le capteur de position PSD d'un support 1116 réalisée dans un matériau dont le coefficient de dilatation différentiel par rapport à celui de la pièce sur laquelle il est disposé permet, dans la plage de température s'étalant de 0°C à 35°C, de déplacer le capteur de position PSD d'environ 1 µm. La dilatation du support doit être choisie de sorte à compenser le déplacement du spot laser sur le capteur de position.

Il est nécessaire que la dilatation du support soit asservie sur la variation du bloc optique, ce qui suppose une faible inertie thermique entre le conduit et le support du PSD. Cette inertie peut être réduite par un capotage de l'ensemble dans un matériau identique à celui du conduit, offrant une bonne conduction thermique (par exemple un métal inoxydable). Afin de réduire encore plus cette inertie, les premier et second blocs optiques en matériaux transparents peuvent être évidés en dehors du chemin optique parcouru par le faisceau laser. Le ou les évidements ainsi obtenus pouvant recevoir des matériaux conducteur thermique afin de réduire l'inertie thermique du ou desdits blocs.

Par exemple, si la pièce sur laquelle repose le support du capteur de position PSD est réalisé en acier (l'acier présente un coefficient de dilatation thermique de dL/dT = 5.10-⁷m/K) et si le support qui porte le capteur de position PSD est en aluminium (l'aluminium présente un coefficient de dilatation thermique de dL/dT = 5.10-⁶m/K), sur la plage précitée de températures s'étendant sur 20°C, le différentiel est de 0,9.10-⁶ x 20 = 18.10-⁶. Donc pour s'allonger de 0,5 µm et compenser le déplacement dP précité du spot laser, la pièce en aluminium doit mesurer L = 2,8 cm. Le phénomène est réversible sans hystérésis et linéaire sur la plage de température.

Il est nécessaire que cette variation suive les variations des blocs optiques, pour cela et afin d'éviter d'éventuels gradients thermiques entre les blocs optiques et le capteur de position. Pour ce faire, une première technique selon l'invention consiste à mettre une partie du support dilatable sur lequel le capteur de position PSD est asservi en contact avec l'eau. Une seconde technique selon l'invention consiste à dilater le support en fonction d'une mesure de température faite sur les blocs optiques eux-mêmes.

Ainsi, pour résumer, il existe trois principales solutions pour rendre les réfractomètres ou capteurs de salinité selon l'invention insensibles aux effets des variations de la température.

La première consiste en l'utilisation de blocs optiques présentant des coefficients thermo-optiques qui se compensent. Cette solution conduit à l'obtention de capteurs de salinité de faible coût, ce qui est idéal pour la réalisation de tels capteurs destinés à être perdu en mer.

La seconde consiste en la mise en oeuvre d'une correction off-line logicielle.

La troisième consiste en la mise en oeuvre d'un support dilatable pour le capteur de position.

Ces seconde et troisième solutions permettent d'obtenir des capteurs de salinité haut de gamme dont les blocs optique peuvent être réalisés dans des matériaux quelconques.

Les premier et second blocs optiques sont reconfigurables. On peut en effet les disposer de différentes manières autour du conduit.

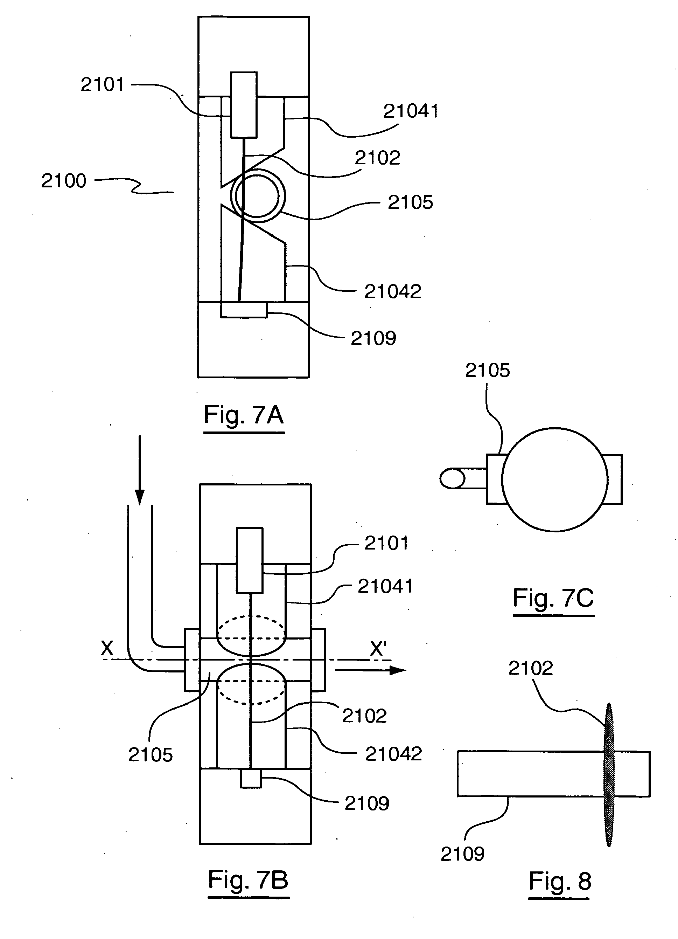

On présente, en relation avec les ***figures 7A à 7C***, une vue de face (figure 7A), de côté (figure 7B) et de section selon un axe X-X' (figure 7C) d'un réfractomètre 2100 selon un second mode de mise en oeuvre de l'invention.

Le réfractomètre 2100 selon le second mode de mise en oeuvre de l'invention se distingue des réfractomètres 1100, 1200, 1300 selon le premier mode de mise en oeuvre de l'invention essentiellement par le fait que les premier 21041 et second 21042 blocs optiques ne sont pas disposés à proximité l'un de l'autre (comme dans les réfractomètres 1100, 1200, 1300) mais sont sensiblement alignés de part et d'autre du conduit 2105.

Le conduit 2105 présente une section circulaire, cependant selon des variantes non illustrées conformes à ce second mode de mise en oeuvre, d'autres conduits à section hexagonale, prismatique ou à section de tout autre forme peuvent être mises en oeuvre.

D'autre part, le faisceau laser 2102 n'est plus réfléchi sur des côtés des blocs optiques lors de son parcours jusqu'au capteur de position 2109.

Les deux flèches disposées sur la figure 7B indiquent le sens de circulation de l'eau de mer dans le conduit 2105.

Une optique de focalisation (non représentée) du faisceau laser 2102 est également mise en oeuvre dans ce réfractomètre 2100. La ***figure 8*** illustre la focalisation du faisceau laser 2102, qui est par exemple elliptique, sur le capteur de position PSD 2109.

Bien entendu, le spot du faisceau laser 2102, ainsi que les spots des faisceaux laser des réfractomètres selon le premier mode de mise en oeuvre de l'invention peuvent être circulaire, elliptiques, ou présenter toute autre forme.

Le réfractomètre 2100 (ou le capteur de salinité comprenant le réfractomètre 2100) offre un encombrement réduit par rapport à la configuration des réfractomètres 1100, 1200, 1300 selon le premier mode de mise en oeuvre de l'invention, il peut donc s'insérer dans des tubes de lancement aux standards aéronautiques.

Bien entendu les blocs optiques peuvent être disposés selon d'autres orientations autour du conduit.

Les modes de mise en oeuvre ainsi que les modes de réalisation précités peuvent être combinés.

Bien entendu, l'invention n'est pas limitée aux exemples de réalisation mentionnés ci-dessus.

En particulier, l'Homme du Métier pourra apporter toute variante dans le choix des matériaux constituant les blocs optiques, le support capteur de position, la pièce sur laquelle repose le support capteur de position, le conduit, ou toute autre pièce du capteur de salinité.

L'invention s'applique bien sûr, également dans le cadre d'autres types de section de conduit, par ailleurs, on peut mettre en oeuvre dans les réfractomètres selon la présente invention des conduits présentant des sections variables en fonction de la position sur le conduit.

### ANNEXE 1

| Matériau | Indice | dn/dT (K⁻¹) | Alpha (cm⁻¹) | Densité (USI) |
|---|---|---|---|---|
| N-K5 | 1,52249 | -4,13. 10⁻⁷ | 8,2 | 2,59 |
| N-F2 | 1,62005 | 4,62. 10⁻⁷ | 7,84 | 2,65 |
| N-BAF51 | 1,65224 | -2,84. 10⁻⁷ | 8,37 | 3,33 |
| N-LF5 | 1,58144 | 1,75. 10⁻⁷ | 8 | 2,57 |
| N-SF5 | 1,67271 | -2,51. 10⁻⁷ | 7,94 | 2,86 |
| N-SK10 | 1,62278 | 5,05. 10⁻⁷ | 6,83 | 3,66 |

### ANNEXE 2

| Matériau | Indice | dn/dT (K⁻¹) | alpha(cm⁻¹) | Densité (USI) |
|---|---|---|---|---|
| N-BK7 | 1,5168 | 1,86. 10⁻⁶ | 7,1 | 2,51 |
| N-LLF1 | 1,54814 | -1,85. 10⁻⁶ | 7,97 | 2,49 |

## Revendications

1. Réfractomètre optique pour la mesure de l'indice de réfraction d'un liquide **caractérisé en ce qu'**il comprend un premier bloc optique (11041) constitué d'un matériau transparent auquel est solidarisé une source lumineuse (1101), un second bloc optique (11042) constitué d'un matériau transparent auquel est solidarisé un capteur de position optique (1109) apte à mesurer la déviation d'un faisceau lumineux issu de la source lumineuse (1101), lesdits blocs optiques étant disposés de part et d'autre d'un conduit (1105, 1205, 1305) dans lequel circule ledit liquide,
et **en ce que** les premier (11041) et second (11042) blocs sont réalisés respectivement dans des premier et second matériaux transparents, les premier et second matériaux présentant des coefficients thermo-optiques opposés et sensiblement égaux en valeur absolue.

2. Réfractomètre selon la revendication 1 **caractérisé en ce que** le liquide est de l'eau de mer et **en ce qu'**il est apte à fonctionner lorsqu'il est immergé.

3. Réfractomètre selon l'une quelconque des revendications 1 et 2 **caractérisé en ce que** ladite source lumineuse (1101) est une source laser coopérant avec des moyens de focalisation (1115) permettant de focaliser le faisceau laser sur le capteur de position.

4. Réfractomètre selon la revendication 3 **caractérisé en ce que** la taille du spot du faisceau laser focalisé sur le capteur de position (1109) est comprise entre 200 µm et 1 mm.

5. Réfractomètre selon l'une quelconques des revendications 3 et 4 **caractérisé en ce que** les moyens de focalisation (1115) sont disposés à proximité de la source laser (1101).

6. Réfractomètre selon l'une quelconque des revendications 3 à 5 **caractérisé en ce que** la source laser émet dans le visible.

7. Réfractomètre selon l'une quelconque des revendications 1 à 6 **caractérisé en ce que** les premier (11041) et second (11042) blocs sont disposés à proximité l'un de l'autre et forment un Vé permettant d'accueillir le conduit (1105, 1205, 1305), **en ce que** le premier bloc comprend un premier côté (1103) comprenant un premier miroir, le second bloc comprend un second côté (1108) comprenant un second miroir, afin que le faisceau laser se réfléchisse sur le premier miroir, traverse le conduit et se réflechisse sur le second miroir.

8. Réfractomètre selon l'une quelconque des revendications 1 à 7 **caractérisé en ce que** l'angle de réfraction du faisceau laser dans le liquide du conduit (1105, 1205, 1305) est compris entre 29 et 31°.

9. Réfractomètre selon l'une quelconque des revendications 7 et 8 **caractérisé en ce qu'**il comprend des moyens de rappel (11053) permettant de maintenir le conduit (1105, 1205, 1305) contre le Vé.

10. Réfractomètre selon l'une quelconque des revendications 1 à 6 **caractérisé en ce que** les premier et second blocs optiques sont sensiblement alignés de part et d'autre du conduit (1105, 1205, 1305).

11. Réfractomètre selon l'une quelconque des revendications 1 à 10 **caractérisé en ce que** la section du conduit (1105) est sensiblement circulaire à l'endroit où le faisceau laser le traverse et **en ce que** des premier (11051) et second (11052) hublots sont prévus respectivement entre le premier bloc et le conduit et entre le conduit et le second bloc.

12. Réfractomètre selon l'une quelconque des revendications 1 à 10 **caractérisé en ce que** la section du conduit (1205, 1305) est sensiblement polygonale à l'endroit où le faisceau laser le traverse.

13. Réfractomètre selon la revendication 12, **caractérisé en ce que** la section du conduit (1205) est sensiblement hexagonale à l'endroit où le faisceau laser le traverse.

14. Réfractomètre selon la revendication 12, **caractérisé en ce que** la section du conduit (1305) est sensiblement prismatique à l'endroit où le faisceau laser le traverse.

15. Réfractomètre selon l'une quelconque des revendications 1 à 14 **caractérisé en ce que** le ou les matériaux transparents présentent chacun un coefficient thermo-optique de l'ordre de 1.10⁻⁷ K⁻¹ en valeur absolue.

16. Réfractomètre selon la revendication 1, **caractérisé en ce que** les premier et second matériauxprésentent chacun un coefficient thermo-optique sensiblement égal à 1,85·10⁻⁶ K⁻¹ en valeur absolue.

17. Réfractomètre selon l'une quelconque des revendications 15 à 16, **caractérisé en ce qu'**au moins un desdits premier (11041) et second (11042) blocs sont au moins partiellement évidés, le ou les évidements étant destinés à recevoir des matériaux conducteur thermique afin de réduire l'inertie thermique du ou desdits blocs.

18. Réfractomètre selon l'une quelconque des revendications 1 à 17, **caractérisé en ce qu'**il comprend, un capteur de température et des moyens de traitement électronique afin de mesurer la variation de température d'au moins un des blocs optiques et d'en déduire la salinité ou l'indice de réfraction du liquide.

19. Réfractomètre selon l'une quelconque des revendications 1 à 17, **caractérisé en ce que** le capteur de position est solidarisé à un support dont les dimensions varient en fonction de la température de manière à compenser au moins un décalage du faisceau optique par rapport audit capteur de position en fonction de la température.

20. Réfractomètre selon la revendication 19, **caractérisé en ce que** le support est réalisé dans un matériau conducteur thermique et **en ce qu'**au moins une partie du support est en contact thermique avec le liquide à mesurer.

21. Réfractomètre selon la revendication 19, **caractérisé en ce que** le support est réalisé dans un matériau conducteur thermique et **en ce que** la variation de ses dimensions est asservie, grâce à des moyens de traitement, à au moins un capteur de température monté à proximité d'au moins un desdits blocs optiques.

22. Capteur de salinité comprenant un réfractomètre selon l'une quelconque des revendications 1 à 21.

## Claims

1. Optical refractometer for measuring refractive index of a liquid, **characterised in that** it comprises a first optical unit (11041) constituted by a transparent material to which there is fixedly joined a light source (1101), a second optical unit (11042) constituted by a transparent material to which there is fixedly joined an optical position sensor (1109) capable of measuring deviation of a light beam from the light source (1101), the optical units being arranged at one side and the other of a conduit (1105, 1205, 1305) in which said liquid flows,
and **in that** the first (11041) and second (11042) units are produced from first and second transparent materials, respectively, the first and second materials having opposing thermo-optical coefficients which are substantially equal in absolute terms.

2. Refractometer according to claim 1, **characterised in that** the liquid is seawater and **in that** it is capable of operating when it is submerged.

3. Refractometer according to any one of claims 1 and 2, **characterised in that** said light source (1101) is a laser source which co-operates with focusing means (1115) enabling the laser beam to be focused on the position sensor.

4. Refractometer according to claim 3, **characterised in that** the size of the spot of the laser beam focused on the position sensor (1109) is between 200 µm and 1 mm.

5. Refractometer according to any one of claims 3 and 4, **characterised in that** the focusing means (1115) are arranged close to the laser source (1101).

6. Refractometer according to any one of claims 3 to 5, **characterised in that** the laser source transmits in the visible range.

7. Refractometer according to any one of claims 1 to 6, **characterised in that** the first (11041) and second (11042) units are arranged close to each other and form a V in which the conduit (1105, 1205, 1305) is received, **in that** the first unit comprises a first side (1103) which comprises a first mirror, the second unit comprises a second side (1108) which comprises a second mirror, so that the laser beam is reflected on the first mirror, passes through the conduit and is reflected on the second mirror.

8. Refractometer according to any one of claims 1 to 7, **characterised in that** the refraction angle of the laser beam in the liquid of the conduit (1105, 1205, 1305) is between 29 and 31°.

9. Refractometer according to claims 7 and 8, **characterised in that** it comprises return means (11053) enabling the conduit (1105, 1205, 1305) to be held against the V.

10. Refractometer according to any one of claims 1 to 6, **characterised in that** the first and second optical units are substantially aligned at one side and the other of the conduit (1105, 1205, 1305).

11. Refractometer according to any one of claims 1 to 10, **characterised in that** the cross-section of the conduit (1105) is substantially circular at the location where the laser beam passes through it and **in that** first (11051) and second (11052) observation windows are provided between the first unit and the conduit and between the conduit and the second unit, respectively.

12. Refractometer according to any one of claims 1 to 10, **characterised in that** the cross-section of the conduit (1205, 1305) is substantially polygonal at the location where the laser beam passes through it.

13. Refractometer according to claim 12, **characterised in that** the cross-section of the conduit (1205) is substantially hexagonal at the location where the laser beam passes through it.

14. Refractometer according to claim 12, **characterised in that** the cross-section of the conduit (1305) is substantially prismatic at the location where the laser beam passes through it.

15. Refractometer according to any one of claims 1 to 14, **characterised in that** the transparent materials or the transparent materials each have a thermo-optical coefficient in the order of 1x10⁻⁷ K⁻¹ in absolute terms.

16. Refractometer according to claim 1, **characterised in that** the first and second materials each have a thermo-optical coefficient substantially equal to 1.85x10⁻⁶ K⁻¹ in absolute terms.

17. Refractometer according to any one of claims 15 and 16, **characterised in that** at least one of the first (11041) and second (11042) units are at least partially recessed, the recess or the recesses being intended to receive thermally conductive materials in order to reduce the thermal inertia of the said unit or units.

18. Refractometer according to any one of claims 1 to 17, **characterised in that** it comprises a temperature sensor and electronic processing means in order to measure the temperature variation of at least one of the optical units and to derive therefrom the salinity or the refractive index of the liquid.

19. Refractometer according to any one of claims 1 to 17, **characterised in that** the position sensor is fixedly joined to a support whose dimensions vary in accordance with the temperature so as to compensate for at least one displacement of the optical beam relative to said position sensor as a function of the temperature.

20. Refractometer according to claim 19, **characterised in that** the support is produced from a thermally conductive material and **in that** at least a portion of the support is in thermal contact with the liquid to be measured.

21. Refractometer according to claim 19, **characterised in that** the support is produced from a thermally conductive material and **in that** the variation of the dimensions is servo-controlled, via processing means, to at least one temperature sensor mounted close to at least one of said optical units.

22. Salinity sensor comprising a refractometer according to any one of claims 1 to 21.

## Patentansprüche

1. Optisches Refraktometer zum Messen des Brechungsindexes einer Flüssigkeit, **dadurch gekennzeichnet, das** es einen ersten optischen Block (11041) umfasst, bestehend aus einem transparenten Material, mit dem eine Lichtquelle (1101) verbunden ist, einen zweiten optischen Block (11042), bestehend aus einem transparenten Material, mit dem ein optischer Positionssensor (1109) verbunden ist, der dazu geeignet ist, die Ablenkung eines aus der Lichtquelle (1101) kommenden Lichtstrahls zu messen, wobei die besagten optischen Blöcke auf beiden Seiten einer Leitung (1105, 1205, 1305) liegen, durch welche die besagte Flüssigkeit fließt,
und dadurch, dass der erste Block (11041) und der zweite Block (11042) jeweils aus einem ersten und einem zweiten transparenten Material gefertigt sind, wobei das erste und zweite dieser Materialien thermo-optische Koeffizienten mit entgegen gesetzten Vorzeichen und mit in etwa gleichem Absolutwert aufweisen.

2. Refraktometer nach Anspruch 1, **dadurch gekennzeichnet, dass** es sich bei der Flüssigkeit um Meerwasser handelt und, dass das Refraktometer auch unter Wasser betrieben werden kann.

3. Refraktometer nach einem der Ansprüche 1 oder 2, **dadurch gekennzeichnet, dass** es sich bei der besagten Lichtquelle (1101) um eine Laserquelle handelt, die mit Fokussierungsmitteln (1115) zusammenwirkt, die das Fokussieren des Laserstrahls auf den Positionssensor ermöglichen.

4. Refraktometer nach Anspruch 3, **dadurch gekennzeichnet, dass** die Größe des Leuchtflecks des auf den Positionssensor (1109) fokussierten Laserstrahls zwischen 200 µm und 1 mm liegt.

5. Refraktometer nach einem der Ansprüche 3 oder 4, **dadurch gekennzeichnet, dass** die Fokussierungsmitteln (1115) in der Nähe der Laserquelle (1101) angebracht sind.

6. Refraktometer nach einem der Ansprüche 3 bis 5, **dadurch gekennzeichnet, dass** das von der Laserquelle abgestrahlte Licht im sichtbaren Bereich liegt.

7. Refraktometer nach einem der Ansprüche 1 bis 6, **dadurch gekennzeichnet, dass** der erste Block (11041) und der zweite Block (11042) dicht beieinander liegen und ein V bilden, das die Leitung (1105, 1205, 1305) aufnimmt, sowie dadurch, dass der erste Block eine erste Seite (1103) aufweist, die einen ersten Spiegel umfasst, und dadurch dass der zweite Block eine zweite Seite (1108) aufweist, die einen zweiten Spiegel umfasst, damit der Laserstrahl am ersten Spiegel reflektiert, durch die Leitung geht und am zweiten Spiegel reflektiert wird.

8. Refraktometer nach einem der Ansprüche 1 bis 7, **dadurch gekennzeichnet, dass** der Brechungswinkel des Laserstrahls in der in der Leitung (1105, 1205, 1305) befindlichen Flüssigkeit zwischen 29° und 31° beträgt.

9. Refraktometer nach einem der Ansprüche 7 oder 8, **dadurch gekennzeichnet, dass** es über Rückholmittel (11053) verfügt, die das Halten der Leitung (1105, 1205, 1305) am V ermöglichen.

10. Refraktometer nach einem der Ansprüche 1 bis 6, **dadurch gekennzeichnet, dass** der erste optische Block und der zweite optische Block in etwa auf beiden Seiten einer Leitung (1105, 1205, 1305) aufeinander ausgerichtet sind.

11. Refraktometer nach einem der Ansprüche 1 bis 10, **dadurch gekennzeichnet, dass** der Querschnitt der Leitung (1105) an der Stelle, an der sie vom Laserstrahl durchquert wird, in etwa kreisförmig ist, und dadurch dass ein erstes Sichtfenster (11051) und ein zweites Sichtfenster (11052) jeweils zwischen dem ersten Block und der Leitung bzw. zwischen der Leitung und dem zweiten Block angeordnet sind.

12. Refraktometer nach einem der Ansprüche 1 bis 10, **dadurch gekennzeichnet, dass** der Querschnitt der Leitung (1205, 1305) an der Stelle, an der sie vom Laserstrahl durchquert wird, in etwa polygonal ist.

13. Refraktometer nach Anspruch 12, **dadurch gekennzeichnet, dass** der Querschnitt der Leitung (1205) an der Stelle, an der sie vom Laserstrahl durchquert wird, in etwa hexagonal ist.

14. Refraktometer nach Anspruch 12, **dadurch gekennzeichnet, dass** der Querschnitt der Leitung (1305) an der Stelle, an der sie vom Laserstrahl durchquert wird, in etwa prismatisch ist.

15. Refraktometer nach einem der Ansprüche 1 bis 14, **dadurch gekennzeichnet, dass** das transparente Material bzw. die transparenten Materialien jeweils einen thermo-optischen Koeffizienten mit einem Absolutwert in der Größenordnung von 1 · 10⁻⁷ K⁻¹ aufweist bzw. aufweisen.

16. Refraktometer nach Anspruch 1, **dadurch gekennzeichnet, dass** das erste Material und das zweite Material jeweils einen thermo-optischen Koeffizienten mit einem Absolutwert in der Größenordnung von 1,85 · 10⁻⁶ K⁻¹ aufweisen.

17. Refraktometer nach einem der Ansprüche 15 bis 16, **dadurch gekennzeichnet, dass** mindestens eines der besagten Blöcke, nämlich der erste Block (11041) und/oder der zweite Block (11042), zumindest teilweise ausgehöhlt ist/sind, wobei die Aushöhlung bzw. die Aushöhlungen Wärme leitende Stoffe aufnehmen sollen, um die thermische Trägheit des besagten Blocks bzw. der besagten Blöcke zu verringern.

18. Refraktometer nach einem der Ansprüche 1 bis 17, **dadurch gekennzeichnet, dass** es einen Temperatursensor und elektronische Verarbeitungsmittel aufweist, um die Temperaturänderung von mindestens einem der optischen Blöcke zu messen und daraus den Salzgehalt oder den Brechungsindex der Flüssigkeit abzuleiten.

19. Refraktometer nach einem der Ansprüche 1 bis 17, **dadurch gekennzeichnet, dass** der Positionssensor mit einer Stütze verbunden ist, deren Abmessungen als Funktion der Temperatur variieren, um mindestens eine Verschiebung des Lichtstrahls gegenüber dem besagten Positionssensor als Funktion der Temperatur auszugleichen.

20. Refraktometer nach Anspruch 19, **dadurch gekennzeichnet, dass** die Stütze aus einem Wärme leitenden Material gefertigt ist und, dass mindestens ein Teil der Stütze sich in thermischer Berührung mit der zu messenden Flüssigkeit befindet.

21. Refraktometer nach Anspruch 19, **dadurch gekennzeichnet, dass** die Stütze aus einem Wärme leitenden Material gefertigt ist und dadurch dass die Variation ihrer Abmessungen mit Hilfe von Verarbeitungsmitteln mindestens einem Temperatursensor unterstellt ist, der in der Nähe eines der besagten optischen Blöcke angebracht ist.

22. Salzgehaltssensor, der ein Refraktometer nach einem der Ansprüche 1 bis 21 aufweist.
